# EUROPEAN PATENT APPLICATION

(11) **EP 4 549 176 A1**
(43) Date of publication of application: **07.05.2025**
(21) Application number: 24208718.7
(22) Date of filing: 24.10.2024
(51) Int. Cl.: B60D 1/02, B60D 1/167, B62D 63/06

(54) **RETRACTABLE DRAWBAR DEVICE FOR TRUCK TRAILER AND RELATED TRAILER**

(30) Priority: 30.10.2023 IT 202300022749
(71) Applicant: CBS S.r.l., 25080 Paitone (BS) (IT)
(72) Inventor: BOLZONI, Simone, 20814 Varedo (MB) (IT)
(74) Representative: Corradini, Cesare

(57) **Abstract**

A drawbar apparatus (10) for a truck trailer (20) is described, said apparatus comprising:
- a drawbar (11),
- a housing (60) for said drawbar in which said drawbar slides,
- said drawbar being available in a position of use (P1), wherein most of the drawbar is arranged outside said housing, and in at least one position of non-use (P2, P3), wherein the drawbar is in a retracted position inside said housing with respect to said position of use.

## Description

### TECHNICAL FIELD

The present invention relates to a retractable drawbar apparatus for a truck trailer and related trailer.

### PRIOR ART

Trucks provided with a trailer and in which the trailer is provided with a drawbar to be connected to the truck are known in the background art.

The drawbars currently provided on trailers are rigidly attached to the trailer; in some cases the drawbars can be removed by the user with complex operations.

An object of the present invention is therefore to overcome the drawbacks outlined above. A further object is to achieve such an objective in the context of a rational, effective and cost-effective solution.

These objects are achieved by the features of the invention set forth in the independent claim. The dependent claims outline preferred and/or particularly advantageous aspects of the invention.

### DISCLOSURE OF THE INVENTION

In particular, the invention makes available a drawbar apparatus for a truck trailer, said apparatus comprising:
- a drawbar,
- a housing for said drawbar in which said drawbar slides,
- said drawbar being available in a position of use, wherein most of the drawbar is arranged outside said housing, and in at least one position of non-use, wherein the drawbar is in a retracted position inside said housing with respect to said position of use. Thanks to the present invention, it is possible to create a drawbar apparatus for a truck trailer which, once attached to the trailer, makes it possible to minimise the drawbar dimensions, especially when unloading a box from the tractor to the trailer.

Preferably the apparatus comprises locking means for locking said drawbar in said housing in the position of use while the drawbar is idle in at least one position of non-use. Preferably the apparatus comprises a first part and a second part, and the first part is removably connectable to the second part.

Thus, the overall dimensions of the entire apparatus during transport can be reduced.

Preferably the apparatus comprises a first part and a second part wherein the second part is attachable to the chassis of the trailer without protruding from the chassis and said first part is connectable to the second part so as to protrude from the chassis of the trailer. Thus, the drawbar apparatus has smaller dimensions than known apparatuses as one part does not protrude from the trailer.

Preferably the second part is available below the chassis of said trailer and said first part is connectable to said second part so as to protrude longitudinally from the chassis of said trailer.

Preferably, the housing is divided into a first portion and a second portion, said first part of the apparatus comprising said first portion of said housing and said second part of the apparatus comprising said second portion of said housing.

Preferably, the drawbar comprises an eye and a rod, said eye being fixed to the front end of the rod, said apparatus comprising means adapted to lock the rear end of said rod, opposite the front end, within said housing in the position of use of the drawbar. Preferably the rod comprises a roller for sliding the drawbar into said housing.

The invention also makes available a truck trailer comprising a drawbar apparatus as previously defined.

Preferably said drawbar apparatus is attached to one end of the chassis of the trailer.

### BRIEF DESCRIPTION OF THE DRAWINGS

Further features and advantages of the invention will be more apparent after reading the following description provided by way of a non-limiting example, with the aid of the figures shown in the accompanying tables:

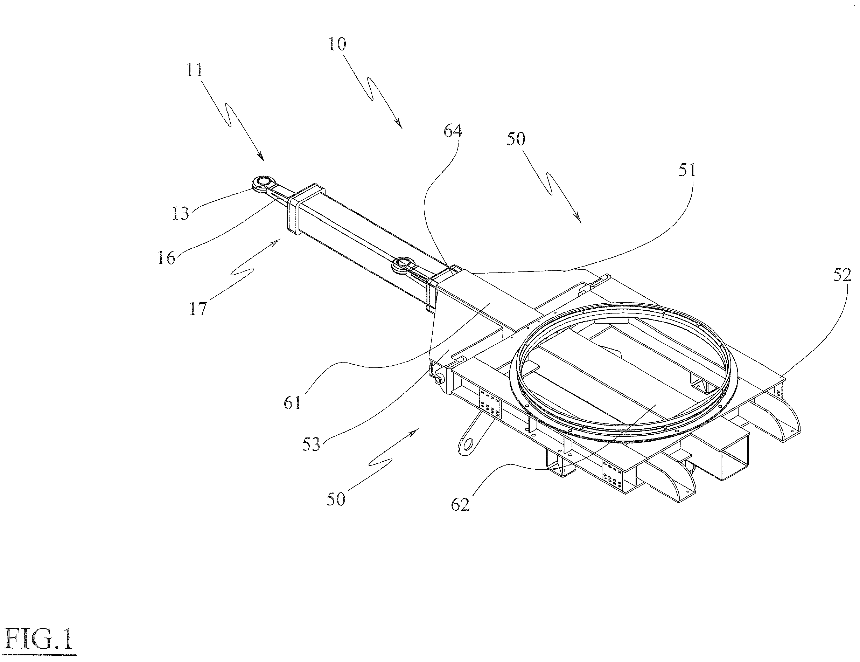

Figure 1 is a perspective view of a retractable drawbar apparatus for a truck trailer in accordance with the present invention;

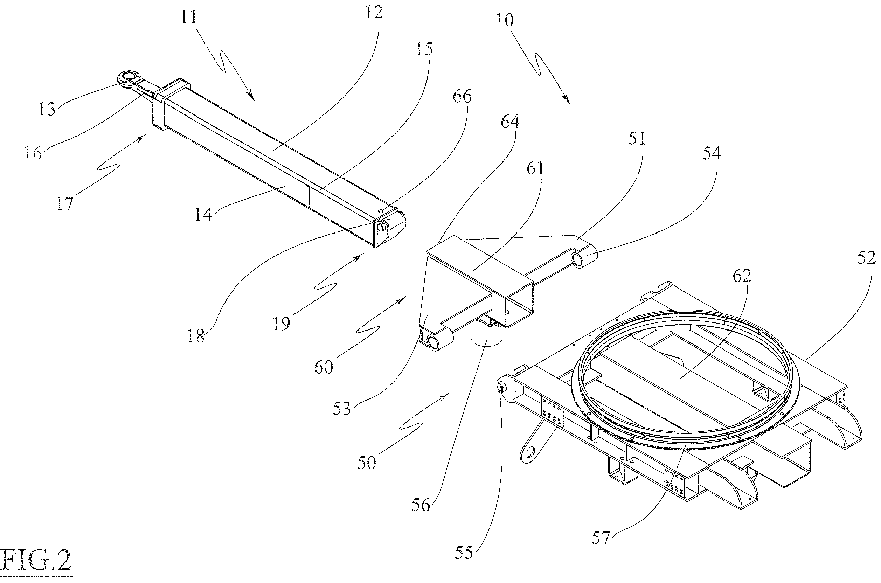

Figure 2 is an exploded view of the retractable drawbar apparatus in Figure 1
Figure 3 is a plan view of a front part of the truck trailer provided with the retractable drawbar apparatus in accordance with the present invention;
Figure 4 is a side view of the front part of the trailer in Figure 1;
Figures 5-8 are schematic views of the steps of unloading a box from the tractor to the trailer provided with the retractable drawbar apparatus in accordance with the present invention.

### BEST MODE TO IMPLEMENT THE INVENTION

With particular reference to these figures, a retractable drawbar apparatus for a truck trailer has been globally referred to as 10.

The retractable drawbar apparatus 10 comprises a drawbar 11 comprising a rod 12 and an eye 13 integral with one end of the rod; the rod 12 preferably has a rectangular cross-section, but even more preferably an octagonal cross-section, with four equal faces 14 alternating with four other equal faces 15 and wherein each face or surface 14 is greater in size than each face or surface 15.

The drawbar 11 comprises a protuberance or extension 16 of the rod 12 from a front end 17 of the rod 12; the extension 16 is smaller in size than the rod 12, branches from the central part of the end 17 and has a substantially rectangular cross-section.

The extension 16 bears the eye 13 which, once the retractable drawbar apparatus 10 is installed in the trailer 20 of the truck 30, allows to engage the trailer 20 with the truck tractor 30.

The rod 12 is also provided with a roller 18, preferably arranged at its end 19, opposite the end 17, to facilitate the sliding of the rod 12 in a housing or support 60.

The retractable drawbar apparatus 10 comprises a carriage 50 which is provided with the housing or support 60 of the drawbar 11. The carriage 50 comprises a first part 51 and a second part 52, separated from each other; the first part 51 is removably connectable to the second part 52. Thus, the overall dimensions of the entire apparatus during transport can be reduced.

Preferably the second part 52 is attachable to the chassis 21 of the trailer 20 without protruding from the chassis 21, and the first part 51 is attachable to the second part 52 so as to protrude from the chassis 21 of the trailer 20, i.e. so as to protrude from the front or rear profile T of the chassis 21 of the trailer 20.

Preferably, the first part 51 protrudes longitudinally outside the trailer 20 once the apparatus 10 is fixed on the trailer and the part 52 is arranged below the chassis or platform 21 of the trailer 20 once the apparatus 10 is fixed on the trailer 20.

The part 51 comprises a first part of the housing 60 of the drawbar 11; said first part is in the form of a hollow tube 61, preferably with a rectangular cross-section but even more preferably having an octagonal inner cross-section to accommodate the shaft 12. Preferably, the hollow tube 61 comprises near the mouth 64 a roller 63 to facilitate the sliding of the rod 12 within the hollow tube 61.

Part 51 comprises a V-shaped support 53 which is connectable to the second part 52, preferably by engaging a pair of cavities 54, preferably hollow tubes with a circular cross-section and having an axis of symmetry transversal to the sliding direction of the rod 12 in the housing 60, with appropriate pins 55 of the part 52.

Part 51 comprises locking means 56 for locking the drawbar 11 in the housing 60, in particular in part 61 of the housing. Preferably said locking means comprise a spring cylinder 56 configured to lock the drawbar 11 within the hollow tube 61, in particular the rear end 19 of the rod 12. The spring cylinder 56 is provided with a piston that engages with a through-hole 66 of the rear end 19 of the rod 12 to lock the drawbar 11 in the position of use, i.e. in the position of maximum extension outside the housing 60. Position of use of the drawbar 11 refers to the position in which the drawbar 11 is normally used, i.e. when the trailer 20 is coupled to the tractor 30, while travelling on the road, and the drawbar 11 is free to swing.

Part 52 comprises the second part 62 of the housing 60 of the drawbar 11; said second part is in the form of a hollow tube 62, preferably having a rectangular cross-section but even more preferably having an octagonal inner cross-section to accommodate the shaft 12. Once part 51 is attached to part 52, the hollow tube 62 represents the continuation of the hollow tube 61 along a longitudinal direction.

Part 52 comprises means 57 for attaching the same part 52 under the platform or chassis 21 of the trailer 20.

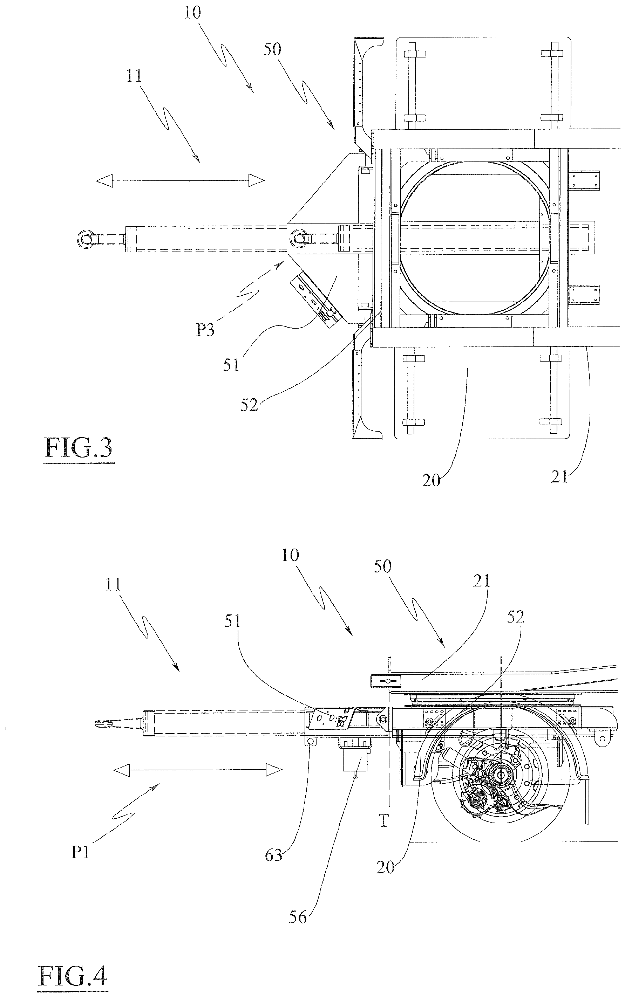

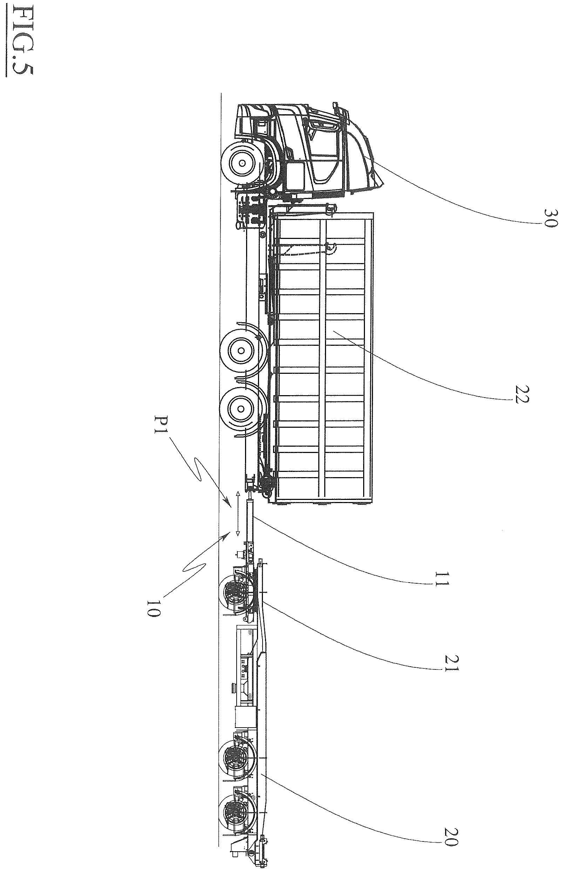

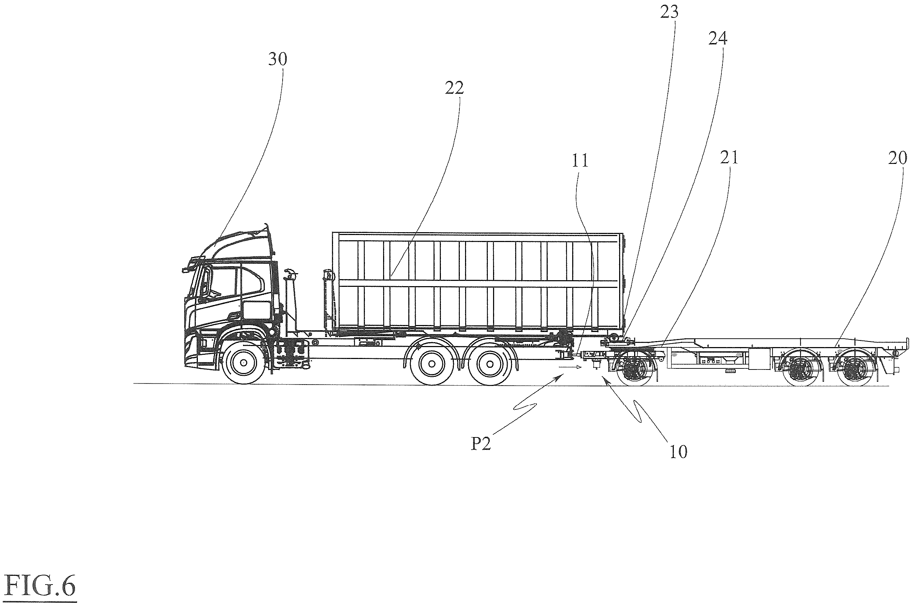

The drawbar 11 is longitudinally slidable within the housing 60 so that the drawbar 11 can be moved from the position of use P1, which coincides with the position of maximum extension outside the housing or support 60, i.e. outside the mouth 64 of the housing 60, into at least one but preferably several non-use positions or retracted positions (for example positions P2 and P3), in which the drawbar is in a retracted position within said housing 60 relative to said position of use P1 (visible in figure 5), i.e. positions (e.g. position P2 visible in Figure 6) in which the drawbar has an extension outside the housing 60, i.e. outside the mouth 64 of the housing 60, which is lower than the extension of the drawbar 11 in the position of use P1. A retracted position is also the position in which the drawbar does not protrude outside the housing 60, i.e. outside the mouth 64 of the housing 60, but is entirely arranged within the housing 60, such as the position P3 visible in Figure 3.

Retracted positions are various positions into which the drawbar is moved from its position of use within its housing 60 manually or by the tractor 30 itself.

In the various retracted positions the drawbar 11 is idle, i.e. it is not locked within its housing 60; in the various retracted or non-use positions that the drawbar 11 may assume, the truck trailer 20 is stationary, i.e. it is not moving on the road and therefore the drawbar 11 is not operational.

In the position of use, however, the drawbar is locked in its housing 60 by means of locking means 56, 66. Specifically, the rear end 19 is locked within the housing 60 by engaging a through-hole 66 of the rear end 19 of the rod 12 with the piston of the spring cylinder 56.

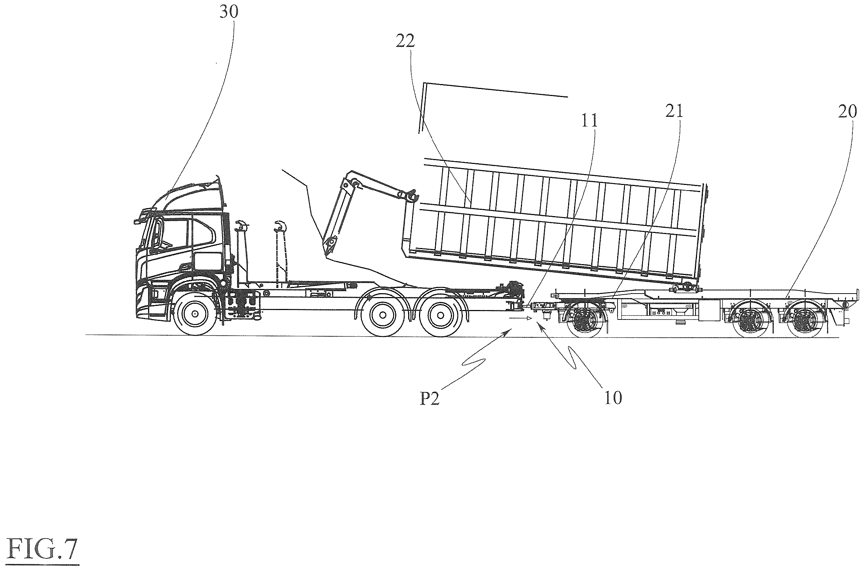

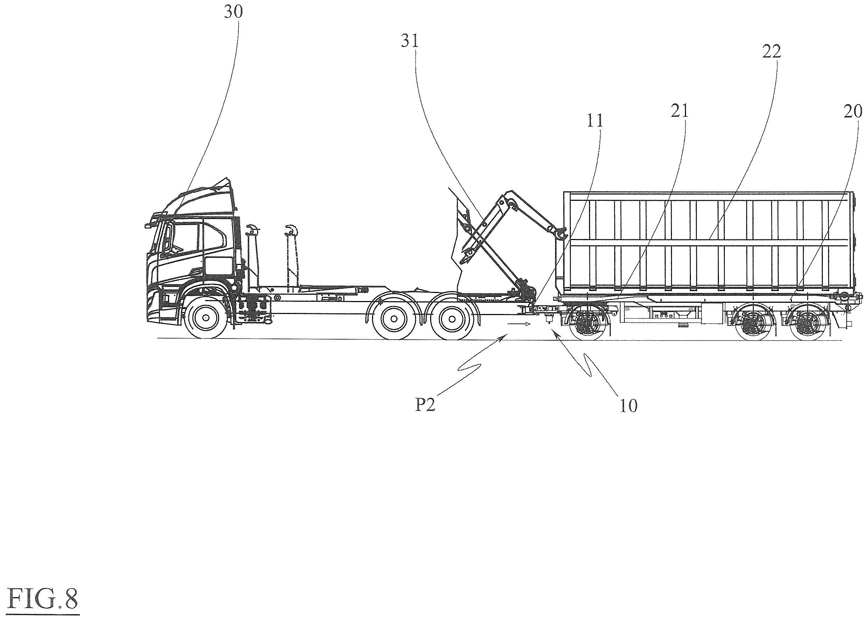

The retractable drawbar apparatus 10 is best used to unload a box 22 from the truck tractor 30 to the trailer 20. Unloading takes place according to the steps shown in Figures 5-8.

In the initial step (Figure 5), the tractor 30 provided with the box 22 is coupled with the trailer 20, in particular by engaging the eye 13 with an appropriate pin of the tractor 30. In this step, the drawbar 11 is extended relative to its housing 60, in particular the drawbar 11 is in the position of use P1, which coincides with the position of maximum extension outside the housing or support 60.

Once the drawbar 11 has been disengaged from the housing 60, after acting on the spring cylinder 56 manually or automatically by moving the tractor 30 towards the trailer 20, the movement of the tractor 30 towards the truck trailer 20 allows the drawbar 11 to be moved within the housing or support 60, i.e. the retraction of the drawbar 11, to a position P2 which facilitates the unloading of the box 22 onto the trailer 20, as visible in Figure 6. Position P2 is a position of non-use because, even though the drawbar 11 is engaged with an appropriate pin of the tractor 30, the drawbar 11 is not operational as the trailer 20 is stationary in its position.

The box 22, in particular its rear end 23, engages with a skid 24 sliding longitudinally on the platform or chassis 21 of the trailer 20. The chassis 21 normally comprises two sidebars that extend longitudinally and crossbars arranged between the two sidebars.

The drawbar 11 is idle, i.e. it is not locked, and the retracted position P2 of the same drawbar 11 is determined by the action of the tractor 30, i.e. the movement of the tractor 30 towards the trailer 20. Suitable crane equipment 31 allows the complete unloading of the box 22 from the tractor 30 to the trailer 20.

The invention thus conceived is susceptible to several modifications and variations, all falling within the scope of the inventive concept.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. Drawbar apparatus (10) for a truck trailer (20), said apparatus comprising:
- a drawbar (11),
- a housing (60) for said drawbar in which said drawbar slides,
- said drawbar being available in a position of use (P1), wherein most of the drawbar is arranged outside said housing, and in at least one position of non-use (P2, P3), wherein the drawbar is in a retracted position inside said housing with respect to said position of use.

2. Apparatus according to claim 1, **characterised by** comprising locking means (56, 66) for locking said drawbar in said housing in the position of use, said drawbar being idle in the at least one position of non-use.

3. Apparatus according to claim 1 or 2, **characterised by** comprising a first part (51) and a second part (52), said first part being removably attachable to said second part.

4. Apparatus according to claim 3, **characterised in that** said second part is attachable to the chassis (21) of the trailer without protruding therefrom and said first part is connectable to said second part so as to protrude from the chassis of the trailer.

5. Apparatus according to claim 4, **characterised in that** said second part is available below the chassis of said trailer and said first part is connectable to said second part so as to protrude longitudinally from the chassis of said trailer.

6. Apparatus according to claim 3, **characterised in that** said housing is divided into a first portion (61) and a second portion (62), said first part of the apparatus comprising said first portion of said housing and said second part of the apparatus comprising said second portion of said housing.

7. Apparatus according to claim 2, **characterised in that** said drawbar comprises an eye (13) and a rod (12), said eye being fixed to the front end (17) of the rod, said locking means (56, 66) being adapted to lock the rear end (19) of said rod, opposite the front end, within said housing in the position of use of the drawbar.

8. Apparatus according to claim 7, **characterised in that** said rod includes a roller (18) for sliding the drawbar into said housing.

9. Truck trailer (20) comprising a drawbar apparatus as defined in any one of the preceding claims.

10. Trailer (20) according to claim 9, **characterised in that** said drawbar apparatus is attached to one end of the trailer chassis.
